# EUROPÄISCHE PATENTANMELDUNG

(11) **EP 1 564 425 A1**
(43) Veröffentlichungstag der Anmeldung: **17.08.2005**
(21) Anmeldenummer: 04100586.9
(22) Anmeldetag: 13.02.2004
(51) Int. Cl.: F16C 1/26

(54) **Vorrichtung zur schwingungsisolierenden Befestigung von Seilzügen**

(71) Anmelder: Ford Global Technologies, LLC, A subsidary of Ford Motor Company, Dearborn, MI 48126 (US)
(72) Erfinder: Steininger, Chris, 50755, Köln (DE)
(74) Vertreter: Drömer, Hans-Carsten, Dr.-Ing.

(57) **Zusammenfassung**

Vorrichtung zur schwingungsisolierenden Befestigung von Seilzügen mit Seele (D) und Mantel (A), insbesondere für die Betätigung von Kraftfahrzeuggetrieben, mit einem an dem Mantel (A) festgelegten Kopplungselement (C) und mit einem mit dem Kopplungselement (C) verbundenen, ortsfesten Befestigungselement (B), wobei zwischen dem Kopplungselement (C) und dem Befestigungselement (B) in axialer Richtung des Seilzugs ein Spalt (S) vorgesehen ist. Zur Verhinderung der Übertragung von Schwingungen weist das Kopplungselement (C) mindestens einen elastischen Bereich (C2) zur Schwingungsisolierung und Aufrechterhaltung des Spalts (S) jeweils im unbetätigten Zustand des Seilzugs auf und das Befestigungselement (B) ist lediglich über den elastischen Bereich (C2) mit dem Mantel (A) verbunden.

## Beschreibung

Die Erfindung betrifft eine Vorrichtung zur schwingungsisolierenden Befestigung von Seilzügen mit Seele und Mantel, insbesondere für die Betätigung von Kraftfahrzeuggetrieben.

Solche Seilzüge sind überall dort einsetzbar, wo Seilzüge zur Betätigung von Schaltsystemen dienen, insbesondere in Kraftfahrzeugen, und mit entsprechenden Anschlussstücken verbunden werden müssen.

Problematisch ist hierbei, dass über die entsprechenden Seilzüge im unbetätigten Zustand Geräusche, die durch Schwingungen erzeugt werden, in das Innere des Fahrzeugs übertragen werden. Dies trifft insbesondere für die Seilzüge zur Betätigung des Getriebes in Kraftfahrzeugen zu. Zur Vermeidung der Übertragung dieser Schwingungen, die von den Passagieren im Fahrgastraum als unangenehm empfunden werden, wird ein hoher technischer Aufwand betrieben.

Bei den üblichen Vorrichtungen sind Gummiverbindungen zwischen einem Befestigungsstück und der Seele des Seilzugs vorhanden, sodass eine bewegliche Verbindung entsteht. Durch den Gummi soll erreicht werden, dass Geräusche bzw. Vibrationen oder Schwingungen nur in geringem Maß übertragen werden.

Eine Minimierung der Erregerfrequenz bzw. Amplitude und die Optimierung der Eigenfrequenz des Systems sind auf diese Weise aber nur in begrenztem Maße möglich. Mit einem weichen Gummi kann zwar eine Minimierung erreicht werden, jedoch geht dies mit einem hohen Verschleiß, z. B. durch Reibung einher, und/oder ergeben sich große Leerbetätigungswege, woraus ein unvorteilhaftes Betätigungsgefühl für einen Bediener folgt. Um Verschleiß zu vermeiden und die Lehrbetätigungswege zu verringern kann ein Gummi mit höherer Festigkeit eingesetzt werden, dann findet allerdings eine Übertragung von Schwingungen und Geräuschen statt. Ferner können durch den Einsatz solcher elastischen Elemente, wie Gummi-Verbindungen, hochfrequente Schwingungen nicht in ausreichendem Maße gedämpft werden, da sie eine lineare Kraft-Weg-Kennung aufweisen, die die Trennung von hoch- und niederfrequenten Bestandteilen nicht erlaubt. Für andere Werkstoffe, die in dämpfender bzw. isolierender Weise eingesetzt werden können, beispielsweise Kunststoffe, trifft diese Aussage in analoger Weise zu.

Aus der DE 199 28 302 A1 ist eine Vorrichtung zur Befestigung von Seilzügen bekannt, bei der die Seilzugseele über ein Kopplungselement und ein Befestigungselement verbunden wird, wobei zwischen dem Befestigungselement und dem Kopplungselement ein gummibewehrter axialer Spalt vorgesehen ist, sodass eine Übertragung von Schwingungen über die Seele nicht stattfindet. Allerdings können Schwingungen weiterhin über die Ummantelung übertragen werden.

Die US 4,998,446 offenbart eine mehrteilige, klemmende Seilzugbefestigungsanordnung für eine Fahrzeuggetriebeschaltung, bei der die Ummantelung des Bowdenzugs über ein elastisches Dämpfungselement an der Befestigung gelagert ist. Gleichzeitig ist die Ummantelung mit axialem und radialem Spiel an dem Befestigungstragbauteil gelagert, so dass erst nach Übersteigen der Dämpfung ein Kraftschluss mit der Befestigung vorliegt. Somit können Schwingungen teilweise ausgeglichen werden. Allerdings steht bei der offenbarten Befestigung die Ummantelung über einen Reibschluss ständig im Kontakt mit der Befestigung, so dass weiterhin Schwingungen und insbesondere hochfrequente Vibrationen übertragen werden.

Aufgabe der Erfindung ist es, eine Vorrichtung zur schwingungsisolierten Aufhängung von ummantelten Seilzügen, insbesondere für die Schaltung von Kraftfahrzeuggetrieben bereitzustellen, die die Übertragung von Schwingungen und Geräuschen über den Mantel verhindert oder zumindest wesentlich verringert und dabei nur einem geringen Verschleiß unterliegt und zudem noch konstruktiv einfach aufgebaut und zu montieren ist. Darüber hinaus soll die zu schaffende Lösung rationell und kostengünstig herstellbar sein.

Diese Aufgabe wird durch die in Anspruch 1 wiedergegebene Abdeckung gelöst.

Dadurch, dass das Kopplungselement mindestens einen elastischen Bereich zur Schwingungsisolierung und Aufrechterhaltung des Spalts jeweils im unbetätigten Zustand des Seilzugs aufweist und das Befestigungselement lediglich über den elastischen Bereich mit dem Mantel verbunden ist, ist es möglich, die Übertragung von Schwingungen zu verhindern, da die Ummantelung nun nur noch über das Kopplungselement mit der Befestigung verbunden ist. Diese Verbindung kann bezüglich ihrer Kraft-Weg-Kennung an die jeweilige Umgebung und das Einsatzgebiet angepasst werden. Insbesondere erlaubt sie die Trennung von hoch- und niederfrequenten Schwingungen. Ein Teil der Schwingungen wird durch den elastischen Bereich des Kopplungselements selbst, der andere Teil durch den Spalt an der Übertragung gehindert. Der elastische Bereich dient auch dazu, die relative Orientierung des Kopplungselements und des Befestigungselements im unbetätigten Zustand zueinander festzulegen. Ferner sind eine Minimierung der Erregerfrequenz bzw. Amplitude und die Optimierung der Eigenfrequenz des Systems möglich. Der Verschleiß ist minimiert, da ein Reibschluss nicht vorliegt. Zudem ist die Vorrichtung einfach aufgebaut und rationell herstellbar.

In einer bevorzugten Ausführungsform weist das Kopplungselement zusätzlich mindestens einen weniger oder nicht elastischen Bereich auf, der vorzugsweise einstückig mit dem elastischen Bereich ausgebildet ist. Dies erlaubt eine einfache Konstruktion.

Günstigerweise ist der elastische Bereich an der der Ummantelung abgewandten Seite des Kopplungselementes vorgesehen. D. h. der weniger oder nicht elastische Bereich kann zur Befestigung des Kopplungselements an der Ummantelung dienen.

Ist der elastische Bereich durch Verjüngung des nicht oder weniger elastischen Bereiches ausgebildet, wird eine einfache Konstruktion erreicht und trotzdem kann das Verhalten des Kopplungselements gezielt eingestellt werden. Dabei ist es von Vorteil, wenn das Kopplungselement mit dem Befestigungselement über die Spitze des verjüngten elastischen Bereichs verbunden ist. Dann kann die Übertragung von Schwingungen besonders gut verhindert werden.

Um die Übertragung von Betätigungskräften zu erlauben, ist das Kopplungselement derart ausgebildet, dass der weniger oder nicht elastischen Bereich des Kopplungselements bei Überschreiten einer bestimmten axialen Kraft, die bei der Betätigung des Seilzugs auftritt und auf den Mantel wirkt, mit dem Befestigungselement in axialer Richtung kraftschlüssig verbunden ist. Mit anderen Worten der elastische Bereich gibt nach bis der weniger oder nicht elastischen Bereich an den Innenseiten des Spalts anliegt und in axialer Richtung die Betätigungskraft über das Befestigungselement weitergibt. Es wird also ein sehr kleiner Totweg, der dem Spaltmaß entspricht, durchlaufen, bevor die Kraft weitergegeben wird.

Um den Totweg in beide Richtungen, d. h. axial entlang des Seilzugs, etwa gleich einzustellen, ist es von Vorteil, wenn das Kopplungselement in axialer Richtung etwa mittig im Spalt angeordnet ist. Dies erlaubt auch eine gute Isolierung gegen eine Übertragung von Schwingungen.

Wirkt auf den Seilzug ständig eine in eine axiale Richtung wirkende Kraft, so kann das Kopplungselement in axialer Richtung vorgespannt sein, um diese Kraft auszugleichen. Hierzu ist es beispielsweise möglich, das Kopplungselement in axialer Richtung zu einer Seite des Spalts geneigt auszuführen.

Um die Eigenschaften des Kopplungselements einzustellen, können insbesondere zwei Kopplungselemente vorgesehen sein. Somit kann z. B. eine weiche Betätigung bzw. Übergang zwischen isolierender Stellung (freier Spalt) und Betätigungsstellung (Kopplungselement liegt an der Innenseite des Spalts am Befestigungselement an) eingestellt werden. Es versteht sich, dass im Rahmen der Erfindung auch mehr als ein bzw. zwei Kopplungselemente und Befestigungselemente vorgesehen werden können, um die Einstellung der gewünschten Charakteristika zu erlauben.

Der Spalt ist vorteilhafterweise derart bemessen, dass hochfrequente Schwingungen isoliert werden können, da diese dazu neigen im Fahrgastraum unerwünschte Schwingungen zu erzeugen.

Der Spalt kann an seiner Innenseite mit dämpfenden und/oder begrenzenden Elementen versehen sein. Diese können zur Einstellung der gewünschten schwingungsisolierenden Charakteristika und des Totwegs verwendet werden.

Das Kopplungselement kann in jeglicher geeigneter Art an dem Mantel festgelegt sein. Es bieten sich Kleben, Schrauben, Schweißen, Klemmen, Clipsen usw. an. Insbesondere bietet es sich an, das Kopplungselement durch Presssitz an der Ummantelung festzulegen.

Zur Festlegung des Befestigungselements z. B. am Getriebe, kann dieses eine radial umlaufende, dem Mantel abgewandte Nut aufweisen, die zur Aufnahme einer Befestigungsklammer dient.

Eine besonders einfache und kompakte Anordnung wird ermöglicht, wenn das Befestigungselement das Kopplungselement umgibt. Hierzu kann das Befestigungselement eine radial umlaufende, dem Mantel zugewandte Nut aufweisen, in der das Kopplungselement angeordnet ist.

In einer weiteren Ausführungsform kann das Kopplungselement im Axialschnitt besehen eine etwa "M"- bzw. "W"-förmige Gestalt aufweisen.

Ferner kann der elastische Bereich des Kopplungselements durch ein etwa S-förmiges Federelement ausgebildet werden.

Das Kopplungselement und das Befestigungselement können einstückig oder als separate Bauteile ausgebildet sein. Sind sie als separate Bauteile ausgebildet, so können sie in unterschiedlicher Weise an montiert bzw. zusammengesetzt werden. Das Kopplungselement kann zunächst an dem Mantel festgelegt, das Befestigungselement mit diesem verbunden und anschließend am Getriebe oder Ähnlichem befestigt werden. Umgekehrt kann auch das Befestigungselement zuerst an dem Getriebe befestigt werden, bevor es mit dem Kopplungselement verbunden und dieses an dem Mantel festgelegt wird. Auch der vorherige Zusammenbau der Vorrichtung aus Kopplungselement und Befestigungselement vor der Befestigung an dem Mantel und dem Getriebe oder Kombinationen der genannten Vorgehensweisen sind denkbar.

Weitere Merkmale, Einzelheiten und Vorteile der Erfindung ergeben sich aus der nachfolgenden Beschreibung der Zeichnung. Es zeigen:
- Fig. 1: eine schematische Ansicht eines Axialschnitts einer Ausführungsform der Erfindung;
- Fig. 2: eine schematische Ansicht eines Axialschnitts einer weiteren Ausführungsform der Erfindung;
- Fig. 3: eine schematische Ansicht eines Axialschnitts einer weiteren Ausführungsform der Erfindung;
- Fig. 4: eine schematische Ansicht eines Axialschnitts einer weiteren Ausführungsform der Erfindung;

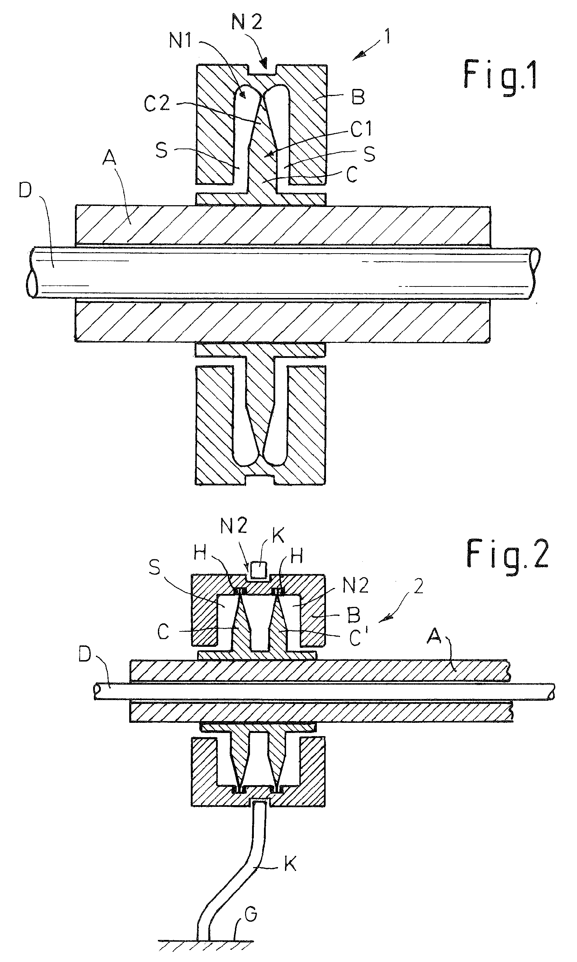

Figur 1 zeigt eine schematische Ansicht eines Axialschnitts einer ersten Ausführungsform 1 der erfindungsgemäßen Vorrichtung zur schwingungsisolierten Aufhängung von ummantelten Seilzügen. Der Seilzug D ist von einem Mantel A umgeben, an dem ein Kopplungselement C festgelegt ist. In der dargestellten Ausführungsform ist das Kopplungselement C mit dem Mantel A des Seilzugs D verklebt. Das Kopplungselement C umgibt also den Mantel A etwa in der Form einer Manschette, die wiederum von einem Befestigungselement B umgeben ist.

Das Kopplungselement C weist in der Axialschnittansicht eine invertierte T-Form auf, d. h. der Kopf oder Quersteg des "T" liegt an dem Mantel A an und der Längssteg zeigt von dieser radial gerichtet weg. Der Quersteg bildet zusammen mit dem ersten Teil des Längsstegs einen nicht oder weniger elastischen bereich C1, der in einen elastischen Bereich C2 übergeht. Der elastische Bereich C2 wird durch eine Verjüngung des weniger oder nicht elastischen Bereichs C1 gebildet. Seine Elastizität ist daher eine Funktion des verwendeten Materials und dessen Stärke sowie der Verjüngung.

Das Kopplungselement C ist umgeben von einem Befestigungselement B, welches zur Befestigung der Vorrichtung mit dem in Fig. 1 nicht dargestellten Getriebe (vgl. Bezugszeichen G in Fig. 2) dient. Hierzu weist es an seiner, dem Mantel A abgewandten Außenseite eine radial umlaufende Nut N2 auf, in die eine in Fig. 1 nicht dargestellte Klammer (vgl. Bezugszeichen K in Fig. 2) zwecks klemmender Festlegung am Getriebe eingreift.

Das Befestigungselement weist im Schnitt besehen etwa die Gestalt eines auf dem Kopf stehenden "U" auf, in dessen so gebildeter Nut N1 das Kopplungselement C mittig hineinragt bzw. aufgenommen ist.

Zwischen dem Kopplungselement C und dem Befestigungselement B liegt ein Spalt S, der in axialer Richtung den Längssteg des Kopplungselements C, also einen Teil des Bereichs C1 und den gesamten Bereich C2 von den Innenseiten des Befestigungselements B trennt.

In der dargestellten Ausführungsform sind das Befestigungselement B und das Kopplungselement C einstückig ausgebildet und erfindungsgemäß lediglich über die axiale Verbindung zwischen Befestigungselement B und elastischen Bereich C2 des Kopplungselements verbunden. Dazu weist das Befestigungselement B an der zum Mantel A parallel verlaufenden Innenseite der Nut N1 eine nach Innen zeigende stumpf zulaufende Spitze auf, über die das Kopplungselement C mit seinem spitz zulaufenden elastischen Bereich C2 verbunden ist.

Somit ist der Mantel A des Seilzug D mit der Befestigung nur über diesen "Messerkontakt" verbunden. Durch Wahl der Spaltmaße, des Materials und der Abmessungen des elastischen Bereichs können die schwingungsisolierenden Eigenschaften der Vorrichtung eingestellt werden.

Wichtig ist, dass das Befestigungselement B nicht im Reibkontakt mit der Ummantelung A oder dem Kopplungselement C steht, wie dies aus der US 4,998,446 bekannt ist, so dass Schwingungen nicht übertragen werden.

Der Spalt S isoliert in axialer Richtung also quasi das Befestigungselement B von der Ummantelung A.

Schwingungen mit kleiner Amplitude und/oder kleiner Frequenz werden durch elastische Deformation des Kopplungselements C an der Spitze seines elastischen Bereichs C2 im Bereich des "Messerkontakts" ausgeglichen. Schwingungen mit großer Amplitude und/oder großer Frequenz werden durch Relativbewegung des Kopplungselements C gegenüber dem Befestigungselement B ausgeglichen, wobei das Kopplungselement C auf dem elastischen Bereich C2 "reitet" und um die Spaltmaße des Spalts S hin und her schwingt.

Übersteigt die Kraft in axialer Richtung die durch den Spalt und dem elastischen Bereich C2 ausgleichbare Größe, wie dies bei einer Betätigung des Seilzugs auftritt, so findet die maximale Deformation des elastischen Bereichs C2 des Kopplungselements C statt und der weniger oder nicht elastische Bereich C1, also der dem Quersteg nahe liegende Bereich des Längsstegs, liegt an der Innenseite der Nut N1 des Befestigungselements B an, wodurch es in axialer Richtung zum Kraftschluss kommt. Die Betätigungskraft wird also erst nach Durchlaufen eines durch den Spalt S gebildeten Totwegs des Mantels A weitergegeben. Der Totweg ist jedoch in der Praxis nicht erheblich, da er maximal im Bereich weniger Millimeter, meist 1 mm liegt, so dass er z. B. für die Bedienperson nicht spürbar ist.

Figur 2 zeigt eine schematische Ansicht eines Axialschnitts einer weiteren Ausführungsform 2 der erfindungsgemäßen Vorrichtung zur schwingungsisolierten Aufhängung von ummantelten Seilzügen. Auch bei dieser Ausführungsform ist der Seilzug D von einem Mantel A umgeben, an dem ein Kopplungselement C festgelegt ist. Die Ausführungsform entspricht im Wesentlichen derjenigen nach Fig. 1, sodass für sich entsprechende Teile dieselben Bezugszeichen gewählt wurden und in der nachfolgenden Beschreiung lediglich auf Unterschiede eingegangen wird.

Im Gegensatz zur Ausführungsform nach Fig. 1 weist die Ausführungsform nach Fig. 2 jeweils zwei miteinander verbundene, einstückige elastische und nicht oder weniger elastische Bereiche C2 und C1 auf. Die identischen Kopplungselemente werden in Figur 2 als Ganzes jeweils mit C und C' bezeichnet. Durch die Verwendung zweier Kopplungselemente C und C', die in der Axialschnittansicht in etwa eine invertierte Doppel-T-Form aufweisen, d. h. über den Quersteg des "T" miteinander verbunden sind, können die schwingungsisolierenden Eigenschaften der Vorrichtung derart eingestellt werden, dass ein weicher Übergang zwischen Schwingungsisolierungs- und Kraftweitergabe- bzw. Betätigungsstellung erreicht wird. Dies stellt sich für die Bedienperson u. a. als "weiche" Schaltung dar.

Die Ausführungsform nach Fig. 2 weist einen ähnlichen Aufbau wie in Fig. 1gezeigt auf, jedoch sind Befestigungselement B und die zwei Kopplungselemente C und C' nicht einstückig ausgeführt, sondern die spitz zulaufenden elastischen Bereiche von C und C' werden in eine entsprechende, an der zur Ummantelung A parallel verlaufenden Innenseite des Befestigungselements B vorgesehenen Halterungen H "eingeclipst". Wesentlicher Vorteil dieser Anordnung ist, daß die beiden Kopplungselement C und C' Lagermomente übertragen können. Wenn z. B. die Ummantelung A nicht genau im rechten Winkel zum Befestigungselement B verlaufenen würde, z. B. aus Toleranzgründen, wird diese genaue rechtwinkelige Positionierung durch die beiden Kopplungselemente C und C' erreicht, da diese dann die Ummantelung ausrichten.

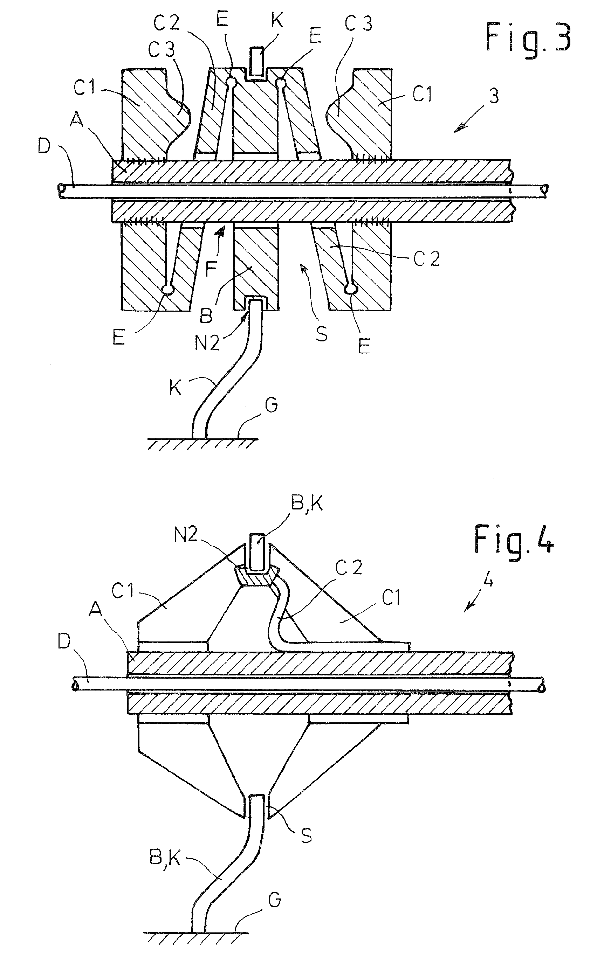

Die in Figur 3 dargestellte alternative Ausführungsform 3 bedient sich derselben Elemente, die daher mit entsprechenden Bezugszeichen gekennzeichnet sind.

Wie bei den Ausführungsformen der Figuren 1 und 2 umgibt das Kopplungselement C der Vorrichtung den Mantel A eines Seilzugs D zur Betätigung eines nur angedeuteten Getriebes G. Das Kopplungselement C ist über ein Befestigungselement B mittels einer Klammer K, die in eine an dessen, dem Mantel A abgewandten Außenseite radial umlaufende Nut N2 zwecks klemmender Festlegung eingreift, an dem Getriebe G festgelegt.

Im Unterschied weist das Kopplungselement C jedoch im Axialschnitt besehen eine etwa "M"- bzw. "W"-förmige Gestalt auf. Es liegt mit zwei weniger oder nicht elastischen Bereichen C1 an dem Mantel A fest, an der es aufgeklebt ist. Von diesen zwei etwa radial zum Seilzug D bzw. zum Mantel A und parallel zueinander verlaufenden, scheibenförmigen Bereichen C1 erstrecken sich auf einander zulaufende, einen Winkel zwischen sich und den Bereichen C1 ausbildende elastische Bereiche C2, die zusammen mit den weniger oder nicht elastischen Bereichen C1 die "M"-bzw. "W"-Form bilden.

Mit der Mitte des "M" bzw. "W" verbunden ist das Befestigungselement B, das sich etwa parallel zu den weniger oder nicht elastischen Bereichen C1 erstreckt und etwa deren Ausmaße aufweist. Damit bei Schwingungen in axialer Richtung eine Bewegung des Kopplungselements zur Isolierung bzw. Verhinderung der Schwingungsübertragung ohne Reibung zwischen dem Mantel A und des Befestigungselements B stattfinden kann, ist der zentrale Durchbruch F der elastischen Bereiche C2 und des Befestigungselements B entsprechend bemessen.

Die Elastizität der Bereiche C2 wird nicht nur durch die Materialwahl bestimmt, sondern auch konstruktiv beeinflusst. Hierzu sind vier Gelenke E, also Bereiche geringerer Materialstärke an den jeweiligen "Knickstellen" vorgesehen. Diese vier Knickstellen E sind ferner derart durch Materialaussparung gestaltet, dass im Schnitt besehen eine etwa halbkreisförmige vorliegt. Somit wird eine gute und leichte Knickbewegung ohne größere Materialermüdung gewährleistet.

Treten Schwingungen oder Vibrationen auf, so werden diese durch ziehharmonikaartiges Hin- und Herschwingen der elastischen Bereiche C2 ausgeglichen.

Wird der Seilzug betätigt und Überschreitet die dabei aufgebrachte Kraft den Totweg des Spalts S, so liegt, wie in den zuvor beschriebenen Ausführungsformen, das Befestigungselement B an dem Kopplungselement C unter Kraftschluss in axialer Richtung an. Um den Totweg und den Übergang von der isolierenden Stellung zur Betätigungsstellung also der Kraftweitergabestellung einzustellen, sind an der zum Spalt S gerichteten Innenseite der Bereiche C1 dämpfende und begrenzende Elementen C3 vorgesehen. Diese ragen in den Spalt S hi nein, verringern somit dessen Ausdehnung und bewirken eine Anpassung des Totwegs und einen weichen Übergang beim ziehharmonika-artigen Anlegen der elastischen Bereiche C2 zwischen den Bereichen C1 und den festliegenden Befestigungselement B.

Die Vorrichtung der Figur 3 lässt sich in besonders geeigneter Weise aus Kunststoff herstellen, welches je nach Materialstärke und Bearbeitung die gewünschte Flexibilität oder Steife bzw. Festigkeit aufweist.

In Figur 4 ist eine weitere Ausführungsform 4 einer erfindungsgemäßen Vorrichtung schematisch im Axialschnitt abgebildet.

Bei dieser Ausführungsform besteht das Kopplungselement aus gebogenem Metallblech, das auf dm Mantel A des Seilzugs D auf geklemmt ist. Es weist jeweils mindestens zwei gegenüber liegende und auf beiden Seiten des Seilzugs vorgesehene nicht oder weniger elastische Bereiche C1 auf, die schräg auf einander zu laufen und in axialer Richtung einen Winkel zwischen sich ausbilden, jedoch voneinander durch einen Spalt S beabstandet sind.

In dem Spalt S etwa mittig angeordnet befindet sich eine Klammer K zur Befestigung der Vorrichtung am Getriebe G. Die Klammer K dient in dieser Ausführungsform gleichzeitig als Befestigungselement B.

Das Kopplungselement C umfasst ferner einen elastischen Bereich C2, der von einem im Schnitt etwa S-förmigen Federelement gebildet wird, das an einem Ende am nicht oder weniger elastischen Bereich C1 befestigt und am anderen Ende eine Nut N1 zur Aufnahme der Klammer K bzw. des Befestigungselements B aufweist. Das Federelement C2 ist derart vorgespannt, dass das Befestigungselement B in axialer Richtung etwa mittig im Spalt gehalten wird.

Auch bei dieser Ausführungsform 4 besteht lediglich ein Kontakt zwischen dem elastischen Bereich C2 des Kopplungselements C und dem Befestigungselement B. Ein Reibschluss zwischen der Ummantelung und der Befestigung ist ausgeschlossen, sodass eine Übertragung von Schwingungen in einfacher Weise verhindert wird.

Kleine Schwingungen werden durch das Federelement C2 und größere Schwingungen werden durch Relativbewegung der Klammer K bzw. des Befestigungselements B und des Kopplungselements C zueinander ausgeglichen.

Erst nach Überschreiten des durch das Ausmaß des Spalts S festgelegten Totwegs wird durch Anlage der nicht oder weniger elastischen Bereiche C1 an der festgelegten Klammer K die Betätigungskraft übertragen.

## Patentansprüche

1. Vorrichtung zur schwingungsisolierenden Befestigung von Seilzügen mit Seele (D) und Mantel (A), insbesondere für die Betätigung von Kraftfahrzeuggetrieben,
mit einem an dem Mantel (A) festgelegten Kopplungselement (C) und
mit einem mit dem Kopplungselement (C) verbundenen, ortsfesten Befestigungselement (B),
wobei zwischen dem Kopplungselement (C) und dem Befestigungselement (B) in axialer Richtung des Seilzugs ein Spalt (S) vorgesehen ist,
**dadurch gekennzeichnet, dass**
das Kopplungselement (C) mindestens einen elastischen Bereich (C2) zur Schwingungsisolierung und Aufrechterhaltung des Spalts (S) jeweils im unbetätigten Zustand des Seilzugs aufweist und das Befestigungselement (B) lediglich über den elastischen Bereich (C2) mit dem Mantel (A) verbunden ist.

2. Vorrichtung nach Anspruch 1,
**dadurch gekennzeichnet, dass**
das Kopplungselement (C) mindestens einen weniger oder nicht elastischen Bereich (C1) aufweist.

3. Vorrichtung nach Anspruch 1 oder 2,
**dadurch gekennzeichnet, dass**
der elastische Bereich (C2) und der nicht oder weniger elastische Bereich (C1) einstückig ausgebildet sind.

4. Vorrichtung nach Anspruch 2 oder 3,
**dadurch gekennzeichnet, dass**
der elastische Bereich (C2) an der dem Mantel (A) abgewandten Seite des Kopplungselementes (C) vorgesehen ist.

5. Vorrichtung nach einem der vorhergehenden Ansprüche 2 bis 4,
**dadurch gekennzeichnet, dass**
der elastische Bereich (C2) durch Verjüngung des nicht oder weniger elastischen Bereiches (C1) ausgebildet ist.

6. Vorrichtung nach Anspruch 5,
**dadurch gekennzeichnet, dass**
das Kopplungselement (C) mit dem Befestigungselement (B) über die Spitze des verjüngten elastischen Bereichs (C2) verbunden ist.

7. Vorrichtung nach einem der vorhergehenden Ansprüche,
**dadurch gekennzeichnet, dass**
der weniger oder nicht elastische Bereich (C1) des Kopplungselements (C) bei Überschreiten einer bestimmten axialen Kraft, die bei Betätigung des Seilzuges auftritt, mit dem Befestigungselement (B) in axialer Richtung kraftschlüssig verbunden ist.

8. Vorrichtung nach einem der vorhergehenden Ansprüche,
**dadurch gekennzeichnet, dass**
das Kopplungselement (C) durch Presssitz an dem Mantel (A) festlegbar ist.

9. Vorrichtung nach einem der vorhergehenden Ansprüche,
**dadurch gekennzeichnet, dass**
das Kopplungselement (C) in axialer Richtung etwa mittig im Spalt (S) ausgerichtet ist.

10. Vorrichtung nach einem der vorhergehenden Ansprüche,
**dadurch gekennzeichnet, dass**
das Kopplungselement (C) in axialer Richtung vorgespannt ist.

11. Vorrichtung nach einem der vorhergehenden Ansprüche,
**dadurch gekennzeichnet, dass**
das Kopplungselement (C) in axialer Richtung zur Seite des Spalts (S) geneigt ist.

12. Vorrichtung nach einem der vorhergehenden Ansprüche,
**dadurch gekennzeichnet, dass**
zwei Kopplungselemente (C) vorgesehen sind.

13. Vorrichtung nach einem der vorhergehenden Ansprüche,
**dadurch gekennzeichnet, dass**
der Spalt (S) derart bemessen ist, dass hochfrequente Schwingungen isoliert werden.

14. Vorrichtung nach einem der vorhergehenden Ansprüche,
**dadurch gekennzeichnet, dass**
das Befestigungselement (B) eine radial umlaufende, dem Mantel (A) abgewandte Nut (N1) aufweist, die zur Befestigung dient.

15. Vorrichtung nach einem der vorhergehenden Ansprüche,
**dadurch gekennzeichnet, dass**
das Befestigungselement (B) das Kopplungselement (C) umgibt.

16. Vorrichtung nach einem der vorhergehenden Ansprüche,
**dadurch gekennzeichnet, dass**
das Befestigungselement (B) eine radial umlaufende, dem Mantel (A) zugewandte Nut (N2) aufweist, in der das Kopplungselement (C) angeordnet ist.

17. Vorrichtung nach einem der vorhergehenden Ansprüche 1 bis 12,
**dadurch gekennzeichnet, dass**
das Kopplungselement (C) im Axialschnitt besehen eine etwa "M"- bzw. "W"-förmige Gestalt aufweist.

18. Vorrichtung nach einem der vorhergehenden Ansprüche 2 bis 17,
**dadurch gekennzeichnet, dass**
der elastische Bereich (C2) des Kopplungselements (C) durch ein etwa S-förmiges Federelement ausgebildet ist.

19. Vorrichtung nach einem der vorhergehenden Ansprüche,
**dadurch gekennzeichnet, dass**
das Kopplungselement (C) und das Befestigungselement (B) einstückig ausgebildet sind.

20. Vorrichtung nach einem der vorhergehenden Ansprüche,
**dadurch gekennzeichnet, dass**
der Spalt (S) an seiner Innenseite mit dämpfenden und/oder begrenzenden Elementen (C3) versehen ist.

21. Vorrichtung nach einem der vorhergehenden Ansprüche,
**dadurch gekennzeichnet, dass**
der elastische Bereich (C2) beim Auftreten von Schwingungen in axialer Richtung zur Schwingungsisolierung verformt.
